# FASCICULE DE BREVET EUROPEEN

(11) **EP 3 912 799 B1**
(45) Date de publication et mention de la délivrance du brevet: **06.09.2023**
(21) Numéro de dépôt: 21174609.4
(22) Date de dépôt: 19.05.2021
(51) Int. Cl.: B29C 63/02, B44C 1/16, B29C 63/00

(54) **DISPOSITIF DE POSE ET DE POSITIONNEMENT DE PLUSIEURS MARQUAGES**
VORRICHTUNG ZUM ANBRINGEN UND POSITIONIEREN MEHRERER MARKIERUNGEN
DEVICE FOR INSTALLING AND POSITIONING A PLURALITY OF MARKINGS

(30) Priorité: 20.05.2020 FR 2005319
(43) Date de publication de la demande: 24.11.2021
(73) Titulaire: Adhetec, 65000 Tarbes (FR)
(72) Inventeur: FUXAN, Marion, 65190 Ozon (FR)
(74) Mandataire: Gevers & Orès

(56) Documents cités:
- FR-A1- 2 776 236
- FR-A1- 2 931 388

## Description

### Domaine technique de l'invention

L'invention concerne un dispositif pour apposer sur une surface un ou plusieurs ensembles de marquage, un procédé pour apposer sur une surface un ou plusieurs ensembles de marquage utilisant ce dispositif ainsi que le procédé de fabrication de ce dispositif.

### Arrière-plan technique

Dans le contexte de l'invention, on entend par « marquage », un ou plusieurs signes tels que lettre, chiffre, symbole, dessin, image... Ces marquages peuvent être de toute forme et de toute dimension.

Il est commun d'apposer des films adhésifs, notamment des films adhésifs comprenant un marquage, sur une surface à des fins informatives ou décoratives (FR2776236 A1 et FR2931388 A1). Lors de l'utilisation de films adhésifs, outre la pose du film adhésif en elle-même, l'une des principales difficultés est leur positionnement sur la surface à marquer. En effet, les différents films adhésifs doivent généralement avoir une position précise à un endroit donné or il est délicat de les coller exactement à cette position.

Le bon positionnement de films adhésifs est d'autant plus compliqué lorsque ces derniers sont nombreux et doivent être apposés à la main. Une application manuelle des films adhésifs se rencontre notamment dans le domaine aéronautique où l'application de tels films adhésifs ne peut pas être industrialisée. Positionner correctement un certain nombre de films adhésifs représente alors une perte de temps considérable pour les opérateurs en charge du marquage. De plus, lorsque des films adhésifs de haute technicité ou avec un marquage très spécifique sont utilisés, un mauvais positionnement de ces derniers oblige à les retirer au risque de l'abîmer entraînant de ce fait un surcoût.

### Résumé de l'invention

L'invention vise à pallier les inconvénients précités.

L'invention vise ainsi à fournir, dans au moins un mode de réalisation de l'invention, un dispositif et un procédé qui facilitent la pose d'un ou de plusieurs films adhésifs.

L'invention vise également à fournir, dans au moins un mode de réalisation de l'invention, un dispositif et un procédé qui permettent d'apposer au moins un film adhésif à une position donnée précise. En particulier, l'invention vise ainsi à fournir, dans au moins un mode de réalisation de l'invention, un unique dispositif et procédé qui permettent d'apposer plusieurs films adhésifs dans des positions donnés précises.

L'invention vise aussi à fournir, dans au moins un mode de réalisation, un dispositif et un procédé qui permettent à un opérateur d'apposer des films adhésifs rapidement, aisément et avec un risque d'erreur limité.

L'invention vise aussi à fournir, dans au moins un mode de réalisation de l'invention, un dispositif et un procédé qui permettent de limiter la présence d'objet étranger potentiellement dangereux contraires notamment aux normes de sécurité aéronautique (Foreign Object Débris : FOD).

Pour ce faire, l'invention concerne un dispositif pour apposer sur une surface, dite surface à marquer, un ou plusieurs ensembles, dits ensembles de marquage, comprenant chacun au moins un film adhésif, chaque ensemble de marquage étant destiné à être appliqué sur une zone, dite zone à marquer, de la surface à marquer. Le dispositif selon l'invention comprend :
- au moins un moyen de fixation configuré pour fixer le dispositif sur la surface à marquer,
- une feuille cadre et
- un ou plusieurs moyens, dits moyens de pose, chaque moyen de pose étant configuré pour appliquer un ensemble de marquage comprenant au moins un film adhésif sur une zone à marquer et comprenant :

- une portion, dite portion de protection, configurée pour couvrir la zone à marquer lors de la fixation du dispositif sur la surface à marquer et
- une portion, dite portion d'application, comprenant :
   - une portion, dite portion support, dont une partie, dite partie libre de la portion support, est séparée ou détachable de la feuille cadre et
   - l'ensemble de marquage,
dans lesquels :
- l'ensemble de marquage est pris en sandwich entre la partie libre de la portion support et la portion de protection de sorte que la face de l'ensemble de marquage qui est destinée à être appliquée sur la zone à marquer est en contact avec la portion de protection et
- la portion d'application est détachable de la portion de protection .

Dans la description qui va suivre, on utilise les termes de dessus, dessous, supérieur(e), inférieur(e) et analogues pour définir une relation d'ordre entre les différents couches, feuilles ou films constituant le dispositif selon l'invention et/ou leurs faces respectives, par référence à un axe normal à la surface à marquer sur lequel le dispositif selon l'invention doit être apposé et orienté de la surface à masquer vers l'extérieur du dispositif selon l'invention.

Le dispositif selon l'invention peut comprendre un ensemble de marquage ou plusieurs ensembles de marquage destinés à être apposés sur la surface à marquer. Chaque ensemble de marquage est destiné à être appliqué sur une zone à marquer de cette surface.

Lorsque le dispositif selon l'invention comprend plusieurs ensembles, il permet de positionner correctement et simultanément des ensembles de films adhésifs sur des zones de la surface à marquer qui peuvent être éloignées les unes des autres.

Chaque ensemble de marquage peut comprendre un film adhésif ou plusieurs films adhésifs. Chaque film adhésif de l'ensemble de marquage est destiné à être appliqué sur une zone à marquer d'une surface à marquer.

Chaque film adhésif est destiné à adhérer à une zone à marquer par tout type d'adhérence. Il peut par exemple s'agir d'une adhérence au moyen d'une substance adhésive ou par des forces électrostatiques.

Lorsqu'un ensemble de marquage comprend plusieurs films adhésifs, il permet de positionner correctement et simultanément sur une même zone à marquer.

L'ensemble de marquage peut consister en un ou plusieurs films adhésifs.

Selon un mode de réalisation, le au moins un film adhésif est un pochoir adhésif, un film adhésif comprenant un ou plusieurs marquage ou un film de protection.

La feuille cadre peut être non adhésive. La feuille cadre sert de cadre aux moyens de pose. Aussi, afin de faciliter l'application du dispositif selon l'invention, elle est de préférence souple et/ou inélastique. De plus, selon un mode de réalisation, la feuille cadre est en un matériau visible, notamment pour que ne puisse pas devenir un objet étranger potentiellement dangereux (FOD : Foreign Object Débris), notamment quand la surface à marquer est la surface d'un aéronef.

Selon un mode de réalisation, le dispositif selon l'invention comprend une feuille, dite feuille support, comprenant le ou les portions support. Les portions support peuvent, par exemple, être prédécoupées dans la feuille support. Dans ce mode de réalisation, la feuille support hors portion(s) support peut servir de feuille cadre.

Selon un mode de réalisation, le dispositif selon l'invention comprend une feuille, dite feuille de protection, comprenant le ou les portions de protection. Les portions de protection peuvent, par exemple, être prédécoupées dans la feuille de protection.

La feuille de protection peut s'étendre sous toute la surface de la feuille cadre. Elle empêche ainsi la feuille cadre d'adhérer à la surface à marquer.

Selon une variante, la feuille de protection hors portion(s) peut servir de feuille cadre.

Le au moins un moyen de fixation est configuré pour fixer le dispositif selon l'invention de manière à ce que chaque moyen de pose couvre la zone à marquer correspondante. En particulier, le au moins un moyen de fixation peut fixer la feuille cadre sur la surface à marquer.

Avantageusement, le au moins un moyens de fixation est adhésif. Les moyens de fixation peuvent être fournis séparément de la feuille cadre et des moyens de pose.

Les moyens de fixation peuvent être sur ou sous la feuille cadre. Le dispositif selon l'invention peut comprendre un moyen de pose lorsqu'un seul ensemble de marquage est à apposer sur la surface à marquer ou plusieurs moyens de pose lorsque plusieurs ensembles de marquage sont à apposer sur la surface à marquer. Avantageusement, le dispositif selon l'invention comprend plusieurs moyens de pose, chaque moyen de pose étant configuré pour appliquer un ensemble de marquage sur une zone à marquer. Etant donné que chaque moyen de pose comprend un ensemble de marquage, le dispositif selon l'invention permet donc de positionner simultanément et aisément plusieurs ensembles de marquage sur une même surface à marquer.

Chaque moyen de pose comprend une portion de protection et une portion d'application.

La portion de protection de chaque moyen de pose est configurée pour couvrir la zone à marquer correspondante à l'ensemble à marquer de ce moyen lors de la fixation du dispositif sur la surface à marquer.

Typiquement, chaque portion de protection comprend une face supérieure en contact avec la face inférieure de l'ensemble de marquage et une face destinée à être en contact avec une zone à marquer lors de la fixation du dispositif sur la surface à marquer. La face inférieure de la portion de protection n'est de préférence pas adhésive. La portion de protection empêche donc la face de l'ensemble de marquage qui est destinée à être appliquée sur la zone à marquer de coller à cette zone, lorsque le dispositif est fixé sur la surface à marquer.

Pour chaque moyen de pose, la portion d'application est détachable de la portion de protection. En particulier, la face inférieure de l'ensemble à marquer en contact avec la portion de protection est détachable de cette dernière.

Le détachement de la portion d'application de la portion de protection peut être réalisé par pelage. Pour ce faire, la portion d'application peut comprendre un moyen de préhension, par exemple une languette ou un manque.

Avantageusement, le pouvoir adhésif de la portion support sur l'ensemble à marquer est supérieur au pouvoir adhésif de l'ensemble à marquer sur la portion de protection. Ainsi, la portion de protection peut se détacher de l'ensemble à marquer sans que l'ensemble à marquer ne se détache de la portion support.

Le pouvoir adhésif correspond à la force nécessaire pour séparer un objet de son support. Le pouvoir adhésif doit être choisi dans une gamme de valeurs, et peut varier en fonction de l'étendue des surfaces à dissocier, de l'épaisseur de la couche d'adhésif et de la résistance des matériaux encollés. Les propriétés des substances adhésives sont bien connues de l'homme du métier qui saura choisir la gamme d'adhésifs de compositions adéquates en fonction des caractéristiques des différents composants (ensemble à marquer, portion de protection, portion support etc.) du dispositif selon l'invention mis en oeuvre.

Selon un mode de réalisation, la portion de protection comprend une partie, dite partie fixe, qui est fixée directement à la feuille cadre. Ainsi la portion de protection ne se détache pas complètement de la feuille cadre même après que la portion de protection ait été détachée de la portion d'application. Elle ne risque pas de constituer un objet étranger (FOD : Foreign Object Débris).

Avantageusement, la portion de protection est configurée pour dégager la zone à marquer lorsqu'elle est détachée de la portion d' application.

Lorsque la portion de protection comprend une partie fixe, elle peut comprendre en outre une zone prédécoupée ou pré-pliée au niveau de sa partie fixe pour faciliter le dégagement de la zone à marquer.

Quant à la portion d'application, pour chaque moyen de pose, elle comprend une portion support et l'ensemble de marquage correspondant à ce moyen de pose.

Avantageusement, la portion d'application est configurée pour être mobile entre une position, dite position fermée dans laquelle elle couvre la zone à marquer et une position, dite position ouverte, dans laquelle elle ne couvre pas la zone à marquer. La mobilité de la portion d'application est notamment due à sa portion support.

En position ouverte, la portion support peut demeurer solidaire de la feuille cadre. Pour ce faire, la portion support peut comprendre une partie, partie dite solidaire, qui est solidaire de la feuille cadre. Selon ce mode de réalisation, la portion support comprend une partie solidaire de la feuille cadre et une partie libre qui est séparée ou détachable de la feuille cadre. Aussi, la portion d'application peut comprendre une partie, dite partie libre de la portion d'application, qui comprend la partie libre de la portion support et l'ensemble de marquage et une partie, dite partie solidaire de la portion d'application, qui comprend la partie solidaire de la portion support.

De ce fait, la partie libre de la portion d'application, comme la partie libre de la portion support, sont mobiles entre une position dite fermée dans laquelle elle couvre la zone à marquer et une position ouverte dans laquelle elle ne couvre pas la zone à marquer.

Selon un mode de réalisation, la partie libre de la portion support est détachable de la feuille cadre.

La portion support peut être configurée pour être partiellement détachée de la feuille cadre, de sorte que lors du détachement partiel de la portion support de la feuille cadre, la partie solidaire de la portion support de la feuille cadre demeure solidaire de cette dernière.

Selon un mode de réalisation, la partie solidaire de la portion support est une partie du contour de la portion support.

La partie libre de la portion support peut être un morceau de la feuille cadre qui est configuré pour pouvoir être partiellement détachée de cette dernière. Afin de permettre ce détachement partiel, une partie du contour de la portion support est prédécoupée. La partie prédécoupée peut être découpée totalement ou partiellement. Une découpe partielle peut par exemple être réalisée en laissant subsister entre les bords de la découpe des liens régulièrement répartis et/ou en découpant une hauteur inférieure à l'épaisseur de la feuille cadre.

Ainsi selon un mode de réalisation, le contour correspondant à la partie libre de la portion support qui est configurée pour être détachée de la feuille cadre est prédécoupé et le contour correspondant à la partie solidaire de la portion support n'est pas prédécoupé.

Selon un mode de réalisation alternatif, le contour correspondant à la partie solidaire de la portion support peut être prédécoupé par exemple pour permettre un meilleur pliage de la portion d'application lors de son passage de la position fermée à la position ouverte ou pour détacher la portion support de la feuille cadre une fois l'ensemble de marquage appliqué sur la zone à marquer. Dans ce cas, la prédécoupe du contour correspondant à la partie solidaire de la portion support peut être telle que la liaison entre la feuille cadre et la partie solidaire de la portion support est supérieure à la liaison entre la feuille cadre et la partie libre de la portion support. Par exemple, le contour correspondant à la partie libre de la portion support peut être découpé totalement alors que le contour correspondant à la partie solidaire de la portion support peut n'être découpé que partiellement.

Le détachement de la partie libre de la portion support de la feuille cadre peut être réalisé par pelage. Pour ce faire, la portion support peut comprendre un moyen de préhension, par exemple une languette ou un manque.

L'invention concerne aussi l'utilisation d'un dispositif pour apposer sur une surface à marquer, un ou plusieurs ensembles de marquage tel que défini précédemment.

L'un des objets de l'invention porte également sur un procédé pour apposer sur une surface, dite surface à marquer, un ou plusieurs ensembles, dits ensembles de marquage, comprenant chacun au moins un film adhésif, chaque ensemble de marquages étant destiné à être appliqué sur une zone, dite zone à marquer. Ce procédé comprend les étapes de :
- fixer le dispositif selon l'invention sur la surface à marquer avec les moyens de fixation,
pour chaque moyen de pose :
- retirer la portion d'application et détacher la portion de protection de la portion d'application,
- dégager la zone à marquer,
- appliquer la portion d'application sur la zone à marquer de manière à coller l'ensemble de marquage sur la zone à marquer
- détacher la portion support de l'ensemble de marquage.

Ce procédé permet d'enlever la portion de protection sans avoir à retourner le ou les ensembles de marquage.

Selon un mode de réalisation, les étapes du procédé pour apposer sur la surface à marquer le ou les ensembles de marquage sont successives. Les étapes de retrait de la portion d'application, de détachement de la portion de protection de la portion d'application et de dégagement de la zone à marquer peuvent être simultanées. En retirant la portion d'application, celle-ci peut se détacher de la portion de protection et cette dernière en étant détachée de la portion d'application peut dégager la zone à marquer.

Typiquement, le dispositif selon l'invention est fixé sur la surface à marquer de sorte que chaque moyen de pose recouvre la zone à marquer correspondante.

Selon un mode de réalisation, la fixation du dispositif selon l'invention sur la surface à marquer est réalisée en fixant la feuille cadre sur la surface à marquer avec les moyens de fixation.

Le retrait de la portion d'application correspond au retrait de la partie libre de la portion d'application c'est à dire la partie de la portion d'application comprenant la partie libre de la portion support et l'ensemble de marquage.

Dans le mode de réalisation où la partie libre de la portion support est détachable de la feuille cadre, le retrait de la partie libre de la portion d'application correspond alors au détachement de la partie libre de la portion support de la feuille cadre.

Le retrait de la portion d'application peut être réalisé par pelage de la partie libre de la portion support notamment grâce à un moyen de préhension tel qu'une languette ou un manque.

Le procédé comprend en outre une étape de détachement de la portion de protection de la portion d'application.

Selon un mode de réalisation, la zone à marquer est dégagée lors du retrait de la portion d'application. La portion de protection est ensuite détachée de la portion d'application.

Selon un autre mode de réalisation, la portion de protection est détachée de la portion d'application simultanément au retrait de la portion d'application. La zone à marquer est alors dégagée simultanément au détachement de la portion de protection ou la partie de protection est retirée suite à ce détachement afin de dégager la zone à marquer.

Le procédé comprend en outre le dépôt de la partie libre de la portion d'application sur la zone à marquer de manière à coller l'ensemble de marquage sur la zone à marquer.

La portion support est ensuite détachée de l'ensemble à marquer. Typiquement, le pouvoir adhésif de l'ensemble à marquer sur la zone à marquer est supérieur au pouvoir adhésif de la portion support sur l'ensemble à marquer.

Lors du détachement de la portion support de l'ensemble à marquer, la portion support peut rester solidaire de la feuille cadre via sa partie solidaire ou être séparée de la feuille cadre. Les moyens de fixation et/ou la feuille cadre et/ou optionnellement la feuille de protection peuvent ensuite être détachés de la surface à marquer.

Selon un mode de réalisation, la surface à marquer est verticale. Le retrait de la portion d'application peut se faire de bas en haut. Le dépôt de la portion d'application sur la zone à marquer afin de coller l'ensemble à marquer peut se faire de haut en bas. Le détachement de le portion support de l'ensemble à marquer peut se faire de haut en bas.

L'invention concerne également un procédé de fabrication d'un dispositif pour apposer sur une surface, dite surface à marquer, un ou plusieurs ensembles, dits ensembles de marquage, comprenant chacun au moins un film adhésif, chaque ensemble de marquage étant destiné à être appliqué sur une zone, dite zone à marquer, de la surface à marquer caractérisé en ce qu'il comprend les étapes de :
- fournir une feuille cadre avec une ou plusieurs portions, dite portion support, chaque portion support comprenant une partie, dite partie solidaire, est solidaire de la feuille cadre et une partie, dite partie libre, est séparée ou détachable de la feuille cadre,
- pour chaque portion support :
   - coller la face supérieure de l'ensemble de marquage à la face inférieure de la portion support de manière à former une portion, dite portion d'application et
   - coller la face inférieure de l'ensemble de marquage à une portion, dite portion de protection de manière à ce que la portion de protection et la portion d'application forment un moyen de pose, la portion d'application étant détachable dela portion de protection .

Le procédé de fabrication d'un dispositif selon l'invention peut comprendre en outre la fourniture d'au moins un moyen de fixation configuré pour fixer le dispositif sur la surface à marquer.

### Brève description des figures

D'autres buts, caractéristiques et avantages de l'invention apparaîtront à la lecture de la description suivante donnée à titre uniquement non limitatif et qui se réfère notamment aux figures annexées.
[Fig.1] La figure 1 est une vue de coupe schématique d'un mode de réalisation d'un dispositif selon l'invention fixé sur une surface à marquer.
[Fig.2] La figure 2 est une vue de face schématique d'un mode de réalisation d'un dispositif selon l'invention fixé sur une surface à marquer.
Les figures 3 à 7 représentent différentes étapes d'un mode de réalisation du procédé selon l'invention pour apposer sur une surface à marquer un ou plusieurs ensembles de marquage.

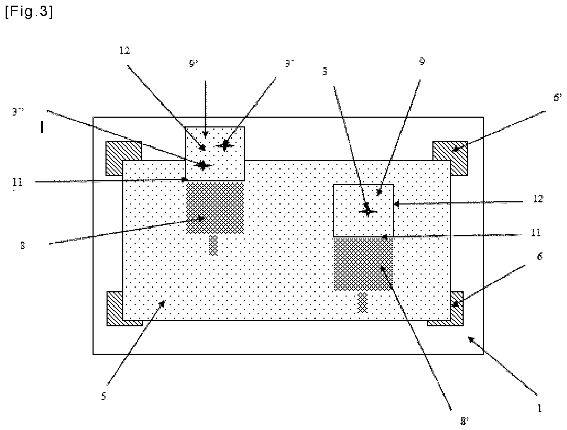

[Fig. 3] La figure 3 est une vue de face schématique d'un mode de réalisation de l'étape de retrait de la portion d'application et de détachement de la portion de protection de la portion d' application.

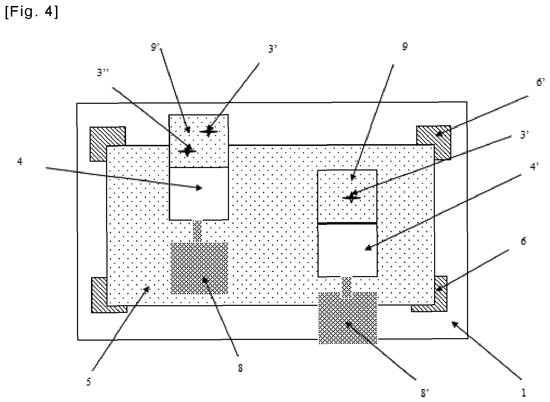

[Fig. 4] La figure 4 est une vue de face schématique d'un mode de réalisation de l'étape de dégagement de la zone à marquer .

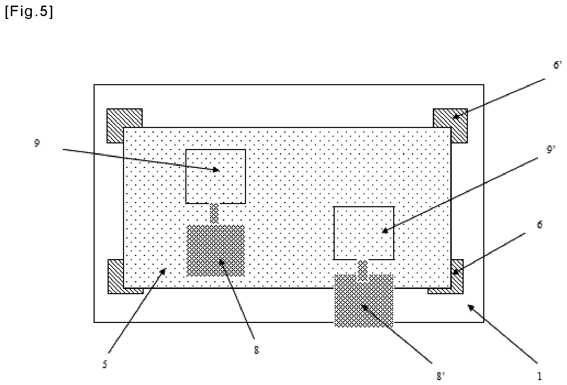

[Fig. 5] La figure 5 est une vue de face schématique d'un mode de réalisation de l'étape de dépôt de la portion d'application sur la zone à marquer.

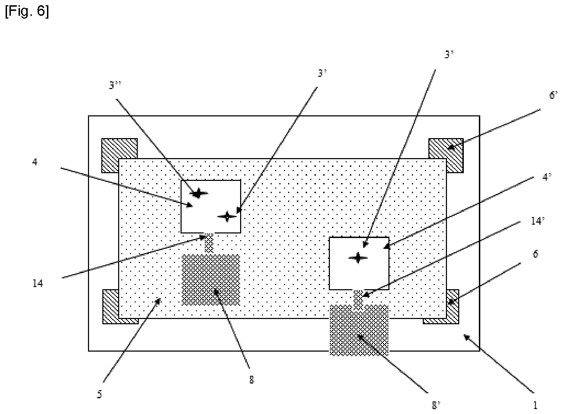

[Fig. 6] La figure 6 est une vue de face schématique d'un mode de réalisation après l'étape de détachement la portion support de l'ensemble de marquage.

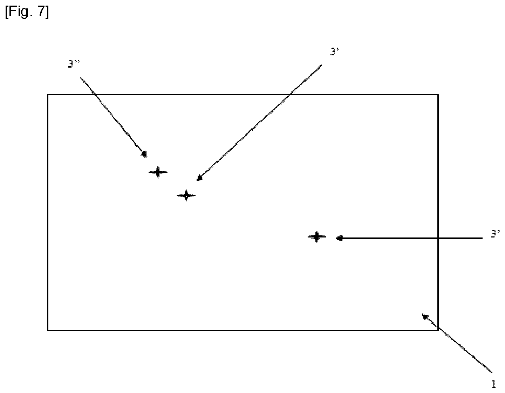

[Fig. 7] La figure 7 est une vue de face schématique d'une surface à marquer sur laquelle des films adhésifs ont été apposés.

Sur les figures, les échelles et les proportions ne sont pas strictement respectées et ce, à des fins d'illustration et de clarté.

### Description détaillée de l'invention

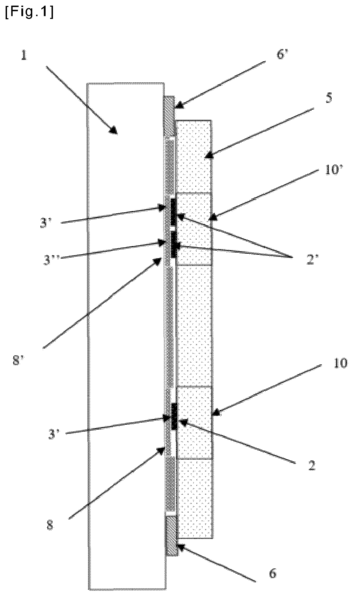

La figure 1 représente une vue de coupe d'un dispositif pour apposer deux ensembles de marquage 2, 2' sur une surface à marquer 1. L'ensemble de marquage 2' comprend deux films adhésifs 3', 3". L'ensemble de marquage 2 comprend un film adhésif 3.

Le dispositif comprend en outre une feuille cadre 5 qui est fixée sur la surface à marquer 1 par des moyens de fixation 6, 6'. Les moyens de fixation 6, 6' sont des rubans adhésifs.

Le dispositif comprend également les moyens de pose 7 et 7' destinés à appliquer respectivement les ensembles à marquer 2 et 2'.

Le moyen de pose 7 comprend la portion de protection 8 et la portion d'application 9 formée par l'ensemble de marquage 2 et la portion support 10.

Le moyen de pose 7' comprend la portion de protection 8' et la portion d'application 9' formée par l'ensemble de marquage 2' et la portion support 10'.

Les portions de protection 8 et 8' font partie d'une même feuille de protection.

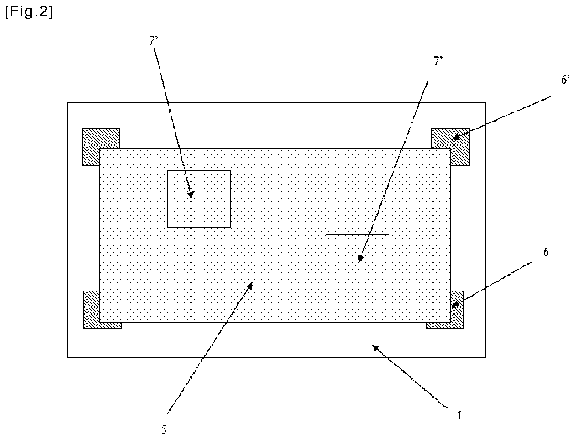

La figure 2 représente une vue de face schématique du dispositif fixé sur une surface à marquer 1 qui est représenté en coupe à la figure 1.

Ce dispositif comprend des moyens de fixations 6, 6', une feuille cadre 5 et des moyens de pose 7, 7'. Le dispositif est fixé sur la surface à marquer de sorte que les moyens de pose 7, 7' couvre respectivement les zones à marquer 4, 4' sur lesquelles sont destinés à être appliquer les ensembles de marquages 2 et 2'.

Sur la figure 3, les portions d'application 9, 9' ont été retirées. Elles sont toutes les deux dans une position ouverte dans laquelle elles ne couvrent pas leur zone à marquer 4, 4'respective.

Le retrait de ces portions d'application 9, 9' de la feuille cadre a été réalisé en détachant par pelage les parties libres 12, 12' des portions des portions support 10, 10'. Les ensembles adhésifs 2, 2' demeurent collés à la partie libre de leur portion support respective formant ainsi des parties libres de la portion d'application.

Chaque portion d'application 9, 9' demeure liée à la feuille cadre par le biais de la partie solidaire 11, 11' de leur portion support. Chaque portion d'application 9, 9' peut ainsi pivoter autour de l'axe formé par la liaison entre la partie solidaire de la portion support et la feuille cadre.

Lors du retrait des portions d'application 9, 9', ces dernières ont été détachées de leur portion de protection 8, 8' respective. Etant donné que le pouvoir adhésif de chaque portion support 10, 10' sur leur ensemble de marquage respectif 2, 2' est supérieur au pouvoir adhésif de ces ensembles de marquage 2, 2' sur leur portion de protection respective, les ensembles de marquage demeurent liés à leur portions support 10, 10' lors du détachement de la portion de protection .

Dans le mode de réalisation représenté à la figure 3, chaque portion de protection 8, 8' continue de couvrir la zone à marquer 4, 4' correspondante après qu'elle a été détachée de la portion d'application 9,9'.

Afin de dégager les zones à marquer, chaque portion de protection est retirée de la zone à maquer correspondante, comme représente à la figure 4. Les portions de protection 8, 8' restent fixées à la feuille cadre 5 par le biais de leur partie fixe 13,13'.

Comme représenté à la figure 5, chaque portion d'application 9, 9' est alors placée dans une position fermée où elle couvre la zone à marquer 4, 4' correspondante. Les ensembles adhésifs peuvent ainsi se coller sur leur zone à marquer 4,4' respective.

Les portions de protection 8, 8' demeurent solidaires de la feuille cadre.

Chaque portion support 10,10' est ensuite détachée de l'ensemble de marquage correspondant. Les films adhésifs 3, 3', 3" des différents ensembles de marquage 2, 2' sont collés sur leur zone à marquer respective. En l'occurrence, les films adhésifs 3, 3', 3" comprennent des marquages en forme d'étoile, comme représenté sur la figure 6.

Selon le mode de réalisation illustré à cette figure, les portions support 10, 10' sont désolidarisées de la feuille cadre, lors de l'étape de détachement des ensembles de marquage 2, 2' des portions support 10, 10'.

Enfin, les moyens de fixation 6, 6', la feuille cadre 5 et les portions de protections 8, 8' qui sont fixées à cette dernière sont retirés de la surface à marquer 1. Il est ainsi fourni une surface à marquer 1 sur laquelle sont apposés les films adhésifs 3, 3', 3" aux emplacements souhaités, comme représenté à la figure 7.

### Liste des signes de référence

1. surface à marquer
2, 2'. ensemble de marquage
3, 3', 3". film adhésif
4, 4'. zone à marquer
5. une feuille cadre
6, 6'. moyen de fixation
7,7'. moyen de pose
8,8'. portion de protection
9, 9'. portion d'application
10, 10'. portion support
11, 11'. partie solidaire de la portion support
12, 12'. partie libre de la portion support
13, 13'. partie fixe de la portion de protection

## Revendications

1. Dispositif pour apposer sur une surface, dite surface à marquer (1), un ou plusieurs ensembles, dits ensembles de marquage (2, 2'), comprenant chacun au moins un film adhésif (3, 3', 3"), chaque ensemble de marquage (2, 2') étant destiné à être appliqué sur une zone, dite zone à marquer (4, 4'), de la surface à marquer (1), le dispositif comprend :
- au moins un moyen de fixation (6, 6') configuré pour fixer le dispositif sur la surface à marquer (1),
- une feuille, dite feuille cadre (5), et
- un ou plusieurs moyens, dits moyens de pose (7, 7'), chaque moyen de pose (7, 7') étant configuré pour appliquer un ensemble de marquage (2, 2') comprenant au moins un film adhésif (3, 3', 3") sur une zone à marquer (4, 4') et comprenant :
- une portion, dite portion de protection (8, 8'), configurée pour couvrir la zone à marquer (4, 4') lors de la fixation du dispositif sur la surface à marquer (1) et
- une portion, dite portion d'application (9, 9'), comprenant :
- une portion, dite portion support (10, 10'), dont une partie, dite partie libre (12, 12') de la portion support, est séparée ou détachable de la feuille cadre (5) et
- l'ensemble de marquage (2, 2'),
dans lesquels :
- l'ensemble de marquage (2, 2') est pris en sandwich entre la partie libre (12, 12') de la portion support et la portion de protection (8, 8') de sorte que la face de l'ensemble de marquage (2, 2') qui est destinée à être appliquée sur la zone à marquer (4, 4') est en contact avec la portion de protection (8, 8') et
- la portion d'application (9, 9') est détachable de la portion de protection (8, 8').

2. Dispositif selon la revendication 1, **caractérisé en ce que** le au moins un film adhésif (3, 3', 3") est un pochoir adhésif, un film adhésif comprenant un ou plusieurs marquages ou un film de protection.

3. Dispositif selon la revendication 1 ou 2, **caractérisé en ce que** le dispositif comprend plusieurs moyens de pose (7, 7'), chaque moyen de pose (7, 7') étant configuré pour appliquer un ensemble de marquage (2, 2') sur une zone à marquer (4, 4').

4. Dispositif selon l'une quelconque des revendications 1 à 3, **caractérisé en ce que** la portion support (10, 10') comprend une partie, dite partie solidaire (11, 11') de la portion support qui est solidaire de la feuille cadre.

5. Dispositif selon l'une quelconque des revendications 1 à 4, **caractérisé en ce que** la portion de protection (8, 8') comprend une partie, dite partie fixe (13, 13'), qui est fixée directement à la feuille cadre (5).

6. Dispositif selon l'une quelconque des revendications 1 à 5, **caractérisé en ce que** le pouvoir adhésif de la portion support (10, 10') sur l'ensemble de marquage (2, 2') est supérieur au pouvoir adhésif de l'ensemble de marquage (2, 2') sur la portion de protection (8, 8').

7. Dispositif selon l'une quelconque des revendications 1 à 6, **caractérisé en ce que** la partie libre (12, 12') de la portion support (10, 10') est détachable de la feuille cadre (5).

8. Utilisation du dispositif selon l'une quelconque des revendications 1 à 7 **caractérisée en ce qu'**elle comprend l'apposition sur une surface à marquer d'un ou plusieurs ensembles de marquage dudit dispositif.

9. Procédé pour apposer sur une surface, dite surface à marquer (1), un ou plusieurs ensembles, dits ensembles de marquage (2, 2'), comprenant chacun au moins un film adhésif (3, 3', 3"), chaque ensemble de marquage (2, 2') étant destiné à être appliqué sur une zone, dite zone à marquer (4, 4'), de la surface à marquer (1) **caractérisé en ce que** le procédé comprend les étapes de :
- fixer le dispositif selon l'une quelconque des revendications 1 à 7 sur la surface à marquer (1) avec les moyens de fixation (6, 6'),
pour chaque moyen de pose (7, 7') :
- retirer la portion d'application (9, 9') et détacher la portion de protection (8, 8') de la portion d'application (9, 9')
- dégager la zone à marquer (4, 4'),
- appliquer la portion d'application (9, 9') sur la zone à marquer (4, 4') de manière à coller l'ensemble de marquage (2, 2') sur la zone à marquer (4, 4') et
- détacher la portion support (10, 10') de l'ensemble de marquage (2, 2').

10. Procédé de fabrication d'un dispositif pour apposer sur une surface, dite surface à marquer (1), un ou plusieurs ensembles, dits ensembles de marquage (2, 2'), comprenant chacun au moins un film adhésif (3, 3', 3"), chaque ensemble de marquage (2, 2') étant destiné à être appliqué sur une zone, dite zone à marquer (4, 4'), **caractérisé en ce qu'**il comprend les étapes de :
- fournir une feuille cadre (5) avec une ou plusieurs portions, dite portion support (10, 10'), chaque portion support (10, 10') comprenant une partie, dite partie libre (12, 12') de la portion support qui est séparée ou détachable de la feuille cadre (5),
- pour chaque portion support (10, 10') :
- coller la face supérieure de l'ensemble de marquage (2, 2') à la face inférieure de la portion support (10, 10') de manière à former une portion, dite portion d'application (9, 9') et
- coller la face inférieure de l'ensemble de marquage (2, 2') à une portion, dite portion de protection (8, 8') de manière à ce que la portion de protection (8, 8') et la portion d'application (9, 9') forment un moyen de pose (7, 7'), la portion de protection (8, 8') étant détachable de la portion d'application (9, 9').

## Patentansprüche

1. Vorrichtung zum Anbringen auf einer Oberfläche, zu markierende Oberfläche (1) genannt, einer oder mehrerer Einheiten, Markierungseinheiten (2, 2') genannt, die jeweils mindestens eine Klebefolie (3, 3', 3") umfassen, wobei jede Markierungseinheit (2, 2') dazu bestimmt ist, auf eine Zone, zu markierende Zone (4, 4') genannt, der zu markierenden Oberfläche (1) aufgebracht zu werden,
wobei die Vorrichtung Folgendes umfasst:
- mindestens ein Befestigungsmittel (6, 6'), das dazu konfiguriert ist, die Vorrichtung auf der zu markierenden Oberfläche zu befestigen,
- ein Blatt, Rahmenblatt (5) genannt, und
- ein oder mehrere Mittel, Anlegemittel (7, 7') genannt, wobei jedes Anlegemittel (7, 7') dazu konfiguriert ist, eine Einheit von Markierungen (2, 2'), die mindestens eine Klebefolie (3, 3', 3") umfasst, auf einer zu markierenden Zone (4, 4') aufzubringen, und Folgendes umfasst:
- einen Abschnitt, Schutzabschnitt (8, 8') genannt, der dazu konfiguriert ist, die zu markierende Zone (4, 4') bei der Befestigung der Vorrichtung auf der zu markierenden Oberfläche (1) abzudecken, und
- einen Abschnitt, Aufbringungsabschnitt (9, 9') genannt, der Folgendes umfasst:
- einen Abschnitt, Tragabschnitt (10, 10') genannt, von dem ein Teil, freier Teil (12, 12') genannt, des Tragabschnitts von dem Rahmenblatt (5) trennbar oder lösbar ist, und
- die Markierungseinheit (2, 2'),
wobei:
- die Markierungseinheit (2, 2') von dem freien Teil (12, 12') des Tragabschnitts und dem Schutzabschnitt (8, 8') derart ins Sandwich genommen wird, dass die Fläche der Markierungseinheit (2, 2'), die dazu bestimmt ist, auf die zu markierende Zone (4, 4') aufgebracht zu werden, mit dem Schutzabschnitt (8, 8') in Berührung ist, und
- der Aufbringungsabschnitt (9, 9') von dem Schutzabschnitt (8, 8') lösbar ist.

2. Vorrichtung nach Anspruch 1, **dadurch gekennzeichnet, dass** die mindestens eine Klebefolie (3, 3', 3") eine Klebeschablone, eine Klebefolie, die eine oder mehrere Markierungen umfasst, oder eine Schutzfolie ist.

3. Vorrichtung nach Anspruch 1 oder 2, **dadurch gekennzeichnet, dass** die Vorrichtung mehrere Anlegemittel (7, 7') umfasst, wobei jedes Anlegemittel (7, 7') dazu konfiguriert ist, eine Markierungseinheit (2, 2') auf einer zu markierenden Zone aufzubringen.

4. Vorrichtung nach einem der Ansprüche 1 bis 3, **dadurch gekennzeichnet, dass** der Tragabschnitt (10, 10') einen Teil, fest verbundener Teil (11, 11') genannt, des Tragabschnitts umfasst, der fest mit dem Rahmenblatt verbunden ist.

5. Vorrichtung nach einem der Ansprüche 1 bis 4, **dadurch gekennzeichnet, dass** der Schutzabschnitt (8, 8') einen Teil, feststehender Teil (13, 13') genannt, umfasst, der direkt an dem Rahmenblatt (5) befestigt ist.

6. Vorrichtung nach einem der Ansprüche 1 bis 5, **dadurch gekennzeichnet, dass** die Haftkraft des Tragabschnitts (10, 10') auf der Markierungseinheit (2, 2') größer ist als die Haftkraft der Markierungseinheit (2, 2') auf dem Schutzabschnitt (8, 8').

7. Vorrichtung nach einem der Ansprüche 1 bis 6, **dadurch gekennzeichnet, dass** der freie Teil (12, 12') des Tragabschnitts (10, 10') von dem Rahmenblatt (5) lösbar ist.

8. Verwendung der Vorrichtung nach einem der Ansprüche 1 bis 7, **dadurch gekennzeichnet, dass** sie das Anbringen auf einer zu markierenden Oberfläche einer oder mehrerer Markierungseinheiten der Oberfläche umfasst.

9. Verfahren zum Anbringen auf einer Oberfläche, zu markierende Oberfläche (1) genannt, einer oder mehrerer Einheiten, Markierungseinheiten (2, 2') genannt, die jeweils mindestens eine Klebefolie (3, 3', 3") umfassen, wobei jede Markierungseinheit (2, 2') dazu bestimmt ist, auf eine Zone, zu markierende Zone (4, 4') genannt, der zu markierenden Oberfläche (1) aufgebracht zu werden, **dadurch gekennzeichnet, dass** das Verfahren die Schritte umfasst, um:
- die Vorrichtung nach einem der Ansprüche 1 bis 7 auf der zu markierenden Oberfläche (1) mit den Befestigungsmitteln (6, 6') zu befestigen,
für jedes Anlegemittel (7, 7'):
- den Aufbringungsabschnitt (9, 9') abzuziehen und den Schutzabschnitt (8, 8') von dem Aufbringungsabschnitt (9, 9') zu lösen,
- die zu markierende Zone (4, 4') freizulegen,
- den Aufbringungsabschnitt (9, 9') auf der zu markierenden Zone (4, 4') derart aufzubringen, dass die Markierungseinheit (2, 2') auf die zu markierende Zone (4, 4') geklebt wird, und
- den Tragabschnitt (10, 10') von der Markierungseinheit (2, 2') zu lösen.

10. Fertigungsverfahren einer Vorrichtung zum Anbringen auf einer Oberfläche, zu markierende Oberfläche (1) genannt, einer oder mehrerer Einheiten, Markierungseinheiten (2, 2') genannt, die jeweils mindestens eine Klebefolie (3, 3', 3") umfassen, wobei jede Markierungseinheit (2, 2') dazu bestimmt ist, auf eine Zone, zu markierende Zone (4, 4') genannt, aufgebracht zu werden, **dadurch gekennzeichnet, dass** das Verfahren die Schritte umfasst, um:
- ein Rahmenblatt (5) mit einem oder mehreren Abschnitten, Tragabschnitt (10, 10') genannt, zu liefern, wobei jeder Tragabschnitt (10, 10') einen Teil, freier Teil (12, 12') genannt, des Tragabschnitts umfasst, der von dem Rahmenblatt (5) getrennt oder lösbar ist,
- für jeden Tragabschnitt (10, 10'):
- die obere Fläche der Markierungseinheit (2, 2') an die Innenfläche des Tragabschnitts (10, 10') derart zu kleben, dass ein Abschnitt, Aufbringungsabschnitt (9, 9') genannt, gebildet wird, und
- die untere Fläche der Markierungseinheit (2, 2') an einen Abschnitt, Schutzabschnitt (8, 8') genannt, derart zu kleben, dass der Schutzabschnitt (8, 8') und der Aufbringungsabschnitt (9, 9') ein Anlegemittel (7, 7') bilden, wobei der Schutzabschnitt (8, 8') von dem Aufbringungsabschnitt (9, 9') lösbar ist.

## Claims

1. A device for affixing to a surface, referred to as the surface to be marked (1), one or more assemblies, referred to as the marking assemblies (2, 2'), each comprising at least one adhesive film (3, 3', 3"), each marking assembly (2, 2') being intended to be applied to an area, referred to as the area to be marked (4, 4'), of the surface to be marked (1), the device comprising:
- at least one fixing means (6, 6') configured to fix the device to the surface to be marked (1),
- a sheet, referred to as the frame sheet (5), and
- one or more means, referred to as the laying means (7, 7'), each laying means (7, 7') being configured to apply a marking assembly (2, 2') comprising at least one adhesive film (3, 3', 3") to an area to be marked (4, 4') and comprising:
- a portion, referred to as the protection portion (8, 8'), configured to cover the area to be marked (4, 4') when attaching the device to the surface to be marked (1), and
- a portion, referred to as the application portion (9, 9'), comprising:
- a portion, referred to as the support portion (10, 10'), part of which, referred to as the free part (12, 12') of the support portion, is separate or detachable from the frame sheet (5), and
- the marking assembly (2, 2'),
wherein:
- the marking assembly (2, 2') is sandwiched between the free part (12, 12') of the support portion and the protective portion (8, 8') so that the face of the marking assembly (2, 2') which is intended to be applied to the area to be marked (4, 4') is in contact with the protective portion (8, 8') and
- the application portion (9, 9') is detachable from the protection portion (8, 8').

2. The device according to claim 1, **characterised in that** said at least one adhesive film (3, 3', 3") is an adhesive stencil, an adhesive film comprising one or more markings or a protective film.

3. The device as claimed in claim 1 or 2, **characterised in that** the device comprises several laying means (7, 7'), each laying means (7, 7') being configured to apply a marking assembly (2, 2') to an area to be marked (4, 4').

4. The device according to any one of claims 1 to 3, **characterised in that** the support portion (10, 10') comprises a part, referred to as the integral part (11, 11') of the support portion, which is integral with the frame sheet.

5. The device according to any one of claims 1 to 4, **characterised in that** the protective portion (8, 8') comprises a part, referred to as the fixed part (13, 13'), which is fixed directly to the frame sheet (5).

6. The device according to any one of claims 1 to 5, **characterised in that** the adhesive power of the support portion (10, 10') on the marking assembly (2, 2') is greater than the adhesive power of the marking assembly (2, 2') on the protective portion (8, 8').

7. The device according to any one of claims 1 to 6, **characterised in that** the free part (12, 12') of the support portion (10, 10') is detachable from the frame sheet (5).

8. The use of the device according to any one of claims 1 to 7, **characterised in that** it comprises affixing to a surface to be marked one or more marking assemblies of said device.

9. A method for affixing to a surface, referred to as the surface to be marked (1), one or more assemblies, referred to as the marking assemblies (2, 2'), each comprising at least one adhesive film (3, 3', 3"), each marking assembly (2, 2') being intended to be applied to an area referred to as the area to be marked (4, 4'), of the surface to be marked (1), **characterized in that** the method comprises the steps of :
- fixing the device according to any one of claims 1 to 7 on the surface to be marked (1) with the fixing means (6, 6'),
for each laying means (7, 7'):
- removing the application portion (9, 9') and detaching the protective portion (8, 8') from the application portion (9, 9')
- clearing the area to be marked (4, 4'),
- applying the application portion (9, 9') to the area to be marked (4, 4') so as to stick the marking assembly (2, 2') to the area to be marked (4, 4') and
- detaching the support portion (10, 10') from the marking assembly (2, 2').

10. The method of manufacturing a device for affixing to a surface, referred to as the surface to be marked (1), one or more assemblies, referred to as the marking assemblies (2, 2'), each comprising at least one adhesive film (3, 3', 3"), each marking assembly (2, 2') being intended to be applied to an area, referred to as the area to be marked (4, 4'), **characterised in that** it comprises the steps of :
- providing a frame sheet (5) with one or more portions, referred to as the support portion (10, 10'), each support portion (10, 10') comprising a free part, referred to as the free part (12, 12') of the support portion which is separate or detachable from the frame sheet (5),
- for each support portion (10, 10'):
- sticking the upper face of the marking assembly (2, 2') to the lower face of the support portion (10, 10') so as to form a portion, referred to as the application portion (9, 9') and
- sticking the lower face of the marking assembly (2, 2') to a portion, referred to as the protective portion (8, 8'), so that the protective portion (8, 8') and the application portion (9, 9') form an laying means (7, 7'), the protective portion (8, 8') being detachable from the application portion (9, 9').
